# EUROPEAN PATENT APPLICATION

(11) **EP 4 446 080 A1**
(43) Date of publication of application: **16.10.2024**
(21) Application number: 24166736.9
(22) Date of filing: 27.03.2024
(51) Int. Cl.: B29B 9/14, B29B 7/78, B29B 7/88, B29B 7/90, B29B 7/92, B29B 9/06, B29B 9/12, B29C 48/00

(54) **INJECTION MOLDING PELLET AND PELLET PRODUCING METHOD**

(30) Priority: 13.04.2023 JP 2023065811
(71) Applicant: Nissei Plastic Industrial Co., Ltd., Hanishina-gun, Nagano 389-0693 (JP)
(72) Inventor: Yoda, Hozumi, Sakaki-machi, Hanishina-gun, Nagano, 3890693 (JP); Anzai, Kazuo, Sakaki-machi, Hanishina-gun, Nagano, 3890693 (JP); Ogiwara, Haruo, Sakaki-machi, Hansihina-gun, Nagano, 3890693 (JP)
(74) Representative: Berghofer, Benedikt

(57) **Abstract**

An injection molding pellet (66) is applied for injection molding. The base material of the injection molding pellet (66) is a polylactic resin, and the polylactic resin is mixed with wood grains (25) with a grain size that does not exceed 50 µm.

## Description

### TECHNICAL FIELD

The present disclosure relates to an injection molding pellet applied for injection molding, and a producing technology thereof.

### BACKGROUND ART

It is known that waste plastics flow out to the oceans, structurally refined in a micrometer size, and harm sea lives like fishes.

If such waste plastics are biodegradable plastics, such plastics do not harm sea lives.

Hence, it is desirable to replace plastics with biodegradable plastics.

However, biodegradable plastics are expensive in comparison with common plastics.

One of the approaches to address such a problem is to mix waste woods like sawdust with biodegradable plastics so as to increase the weight, thereby decreasing costs. Accordingly, a device that mixes waste woods with biodegradable plastics is known, and an example of such a device is disclosed in, for example, Japan Patent No. 5321254.

A technology disclosed in Japan Patent No. 5321254 will be described with reference to FIG. 11.

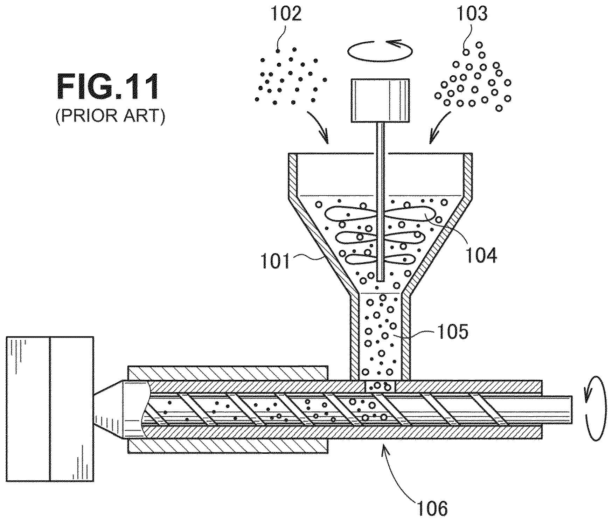

As illustrated in FIG. 11, wood powders 102 and polylactic resins 103 are loaded in a hopper 101, and are stirred by stirring blades 104. A mixture 105 after the stirring is being kneaded by a molding machine 106 and is extruded so as to obtain a molding product.

The wood powder 102 has a grain size that is equal to or greater than 300 µm (see Japan Patent No. 5321254, paragraph [0025]).

However, the technology disclosed in Japan Patent No. 5321254 has the following disadvantages to be described below.

First, a molding product produced by the technology of Japan Patent No. 5321254 has a small tensile strength.

Second, the flowability of a resin material inside a mold is not excellent.

The application of a molding product is now becoming diversified, and thus an improvement of the tensile strength is desired.

Moreover, according to molds for injection molding of small or extremely small molding products, the diameter of a gate becomes inevitably small. Although the polylactic resin 103 becomes similar to a liquid by kneading, the wood powder 102 remains unchanged as solid. When the diameter of the gate becomes small, the wood powders 102 may disturb the fluidity, and thus an approach to address such a problem is desired.

Hence, there is a desire for an injection molding resin material which is formed by blending wood powders with polylactic resins, has a large tensile strength when made as a molding product, and has an excellent flowability in a mold.

### SUMMARY OF THE INVENTION

An objective of the present is to provide an injection molding resin material which is formed by blending wood powders with polylactic resins, has a large tensile strength when made as a molding product, and has an excellent flowability in a mold.

An injection molding pellet according to a first embodiment of the present disclosure is applied for injection molding. A base material of the injection molding pellet is a polylactic resin, and the base material is mixed with wood grains with a grain size that does not exceed 50 µm.

According to the present disclosure, when loaded in an injection molding device, the injection molding pellet is kneaded and plasticized by the injection molding device. Plasticization causes the polylactic resin to be fluidized, but the wood grains remain unchanged as solid.

Although the gate diameter in a mold varies, it is said that the minimum diameter of a tunnel gate is substantially 0.50 mm. Since the wood powders according to conventional technology are 300 µm (0.30 mm), it is often difficult to pass through the tunnel gate that is 0.50 mm.

In contrast, according to the present disclosure, since the wood grain has a grain size of 50 µm (0.05 mm), which is quite smaller than the minimum diameter (0.50 mm) of the tunnel gate, the resin material can smoothly pass through the tunnel gate that is 0.50 mm.

Moreover, although it will be described in detail later, in comparison with the wood powder that is 300 µm, when the wood grain has a grain size of 50 µm, a structure with a tensile strength that is substantially 1.4 times can be expected.

Hence, according to the present disclosure, an injection molding pellet which has a large tensile strength when made as a molding product, and which has an excellent flowability in a mold can be provided.

Preferably, a pellet producing method for producing the above-described injection molding pellet includes:
providing a wood chip, a mill, the polylactic resin, a two-species blending mechanism, and a pellet producing apparatus;
loading the wood chip in the mill and pulverizing by the mill so as to obtain the wood grains with the grain size that is equal to or smaller than 50 µm;
loading the wood grains and the polylactic resin in the two-species blending mechanism to obtain blended grains by the two-species blending mechanism; and
loading the blended grains in the pellet producing apparatus, kneading and extruding by the pellet producing apparatus, and cutting an obtained strand to obtain the injection molding pellet.

The mill, the two-species blending mechanism and the pellet producing apparatus are relatively simple-structure and inexpensive apparatuses. Hence, the injection molding pellet can be produced at relatively low costs.

An injection molding pellet according to a second embodiment of the present disclosure is applied for injection molding. A base material of the injection molding pellet is a polylactic resin, and the base material is mixed with finer wood grains with a grain size that does not exceed 30 µm.

According to the present disclosure, since the wood grain has a grain size of 30 µm (0.03 mm) that is quite smaller than the minimum diameter (0.50 mm) of the tunnel gate, the resin material can smoothly pass through the tunnel gate that is 0.50 mm.

Moreover, although it will be described in detail later, in comparison with the wood powder that is 300 µm, when the wood grain has a grain size of 30 µm, a structure with a tensile strength that is substantially 1.5 times can be expected.

Hence, according to the present disclosure, an injection molding pellet which has a large tensile strength when made as a molding product, and which has an excellent flowability in a mold can be provided.

Preferably, a pellet producing method for producing the above-described injection molding pellet includes:
providing a wood chip, a mill, a classifying screen, polylactic resin grains, a two-species blending mechanism, and a pellet producing apparatus;
loading the wood chip in the mill and pulverizing by the mill so as to obtain wood grains;
classifying the obtained wood grains by the classifying screen to obtain the finer wood grains with the grain size that is equal to or smaller than 30 µm;
loading the finer wood grains and the polylactic resin grains in the two-species blending mechanism to obtain blended grains by the two-species blending mechanism; and
loading the blended grains in the pellet producing apparatus, kneading and extruding by the pellet producing apparatus, and cutting an obtained strand to obtain the injection molding pellet.

The mill, the two-species blending mechanism and the pellet producing apparatus are relatively simple-structure and inexpensive apparatuses. In addition, the classifying screen is quite inexpensive. Hence, the injection molding pellet can be produced at relatively low costs.

### BRIEF DESCRIPTION OF THE DRAWINGS

Several preferable embodiments of the present disclosure will be described below in detail with reference to the accompanying figures in which:
FIG. 1 a conceptual diagram for the principle of a mill according to the present disclosure;
FIG. 2 a conceptual diagram for the principle of a classifying screen;
FIG. 3A is a plan view of two-species blending mechanism;
FIG. 3B is a cross-sectional view taken along a line B-B in FIG. 3A;
FIG. 3C is a cross-sectional view taken along a line C-C in FIG. 3A;
FIG. 4 is a plan view of a pellet producing apparatus;
FIG. 5 is a front view of an injection molding device;
FIG. 6A, FIG. 6B and FIG. 6C are diagrams for describing the principle of a tunnel gate;
FIG. 7 is a graph representing a correlation between the grain size of a wood grain and the tensile strength of a molding product;
FIG. 8 is a graph representing a correlation between a blending ratio of wood grains and the tensile strength of a molding product;
FIG. 9A is a graph representing a relation between the grain size of the wood grain and a change in injecting pressure;
FIG. 9B, FIG. 9C, FIG. 9D and FIG. 9E are conceptual diagrams for describing the principle of a flowability of a molten resin material;
FIG. 10 is a flow diagram for describing a pellet producing method according to the present disclosure; and
FIG. 11 is a diagram for describing a conventional technology.

### MODE FOR CARRYING OUT THE INVENTION

Embodiments of the present disclosure will be described below with reference to the accompanying figures.

### [Examples]

### [Mill]

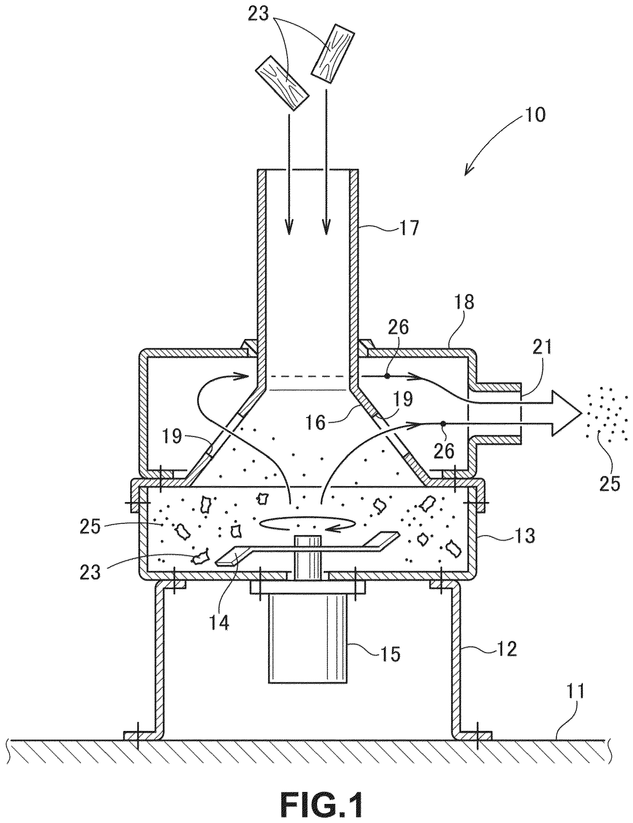

As illustrated in FIG. 1, a mill 10 includes a stand 12 placed on a floor 11, a main chamber 13 supported by the stand 12, a pulverizing blade 14 built in the main chamber 13, a motor 15 that rotates, at fast speed, the pulverizing blade 14, a conical cylinder 16 extending upwardly from the main chamber 13, a vertical cylinder 17 extending upwardly from the conical cylinder 16, and a sub chamber 18 surrounding the conical cylinder 16.

A plurality of holes 19 that connects the main chamber 13 and sub chamber 18 to each other is opened in the conical cylinder 16. The sub chamber 18 is provided with an ejection port 21.

The pulverizing blade 14 is turned at the speed of 1000 to 20000 turns per a minute (16.7 to 333 turns per a second).

When a wood chip 23 is loaded in the vertical cylinder 17, the wood chip 23 is pulverized by the pulverizing blade 14. While remaining in the main chamber 13, the pulverized wood chip is repeatedly pulverized by the milling action of the pulverizing blade 14 and by the centrifugal force originating from the turning, thus becoming wood grains 25 that have a grain size of equal to or smaller than 50 µm. The wood grains 25 ride upon a tornado-like spiral flow 26 and move up to the sub chamber 18, and further, are ejected from the ejection port 21.

The wood grains 25 that have a grain size of equal to or smaller than 50 µm can be obtained through the above processes.

### [Classifying Screen]

When it is necessary to further finely classify the wood grains 25 obtained by the mill 10 illustrated in FIG. 1, a classifying screen 28 is applied.

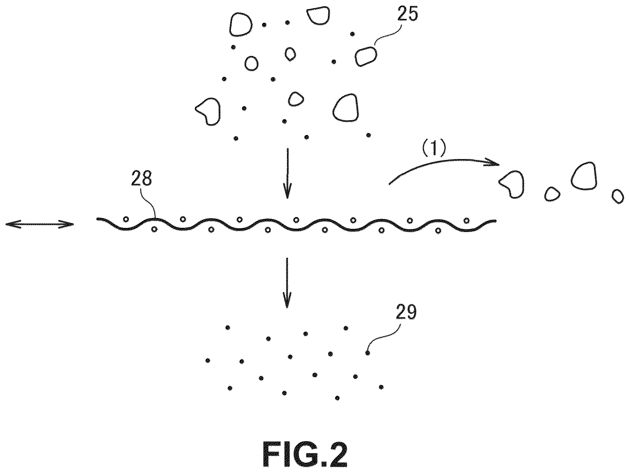

As illustrated in FIG. 2, an example classifying screen 28 is a wire mesh with a mesh size which allows grains of a grain size equal to or smaller than 30 µm to pass through, but which does not allow grains having a grain size that exceeds 30 µm to pass through. The wire mesh is finely moved back and forth.

When the wood grains 25 fall down from the upper space of the classifying screen 28, the wood grains 25 with the grain size that is equal to or greater than 30 µm remain on the screen, and are ejected like an arrow (1).

The grains which have passed through the classifying screen 28 and fall down are finer wood grains 29 having a grain size that is equal to or smaller than 30 µm.

### [Two-species blending Mechanism]

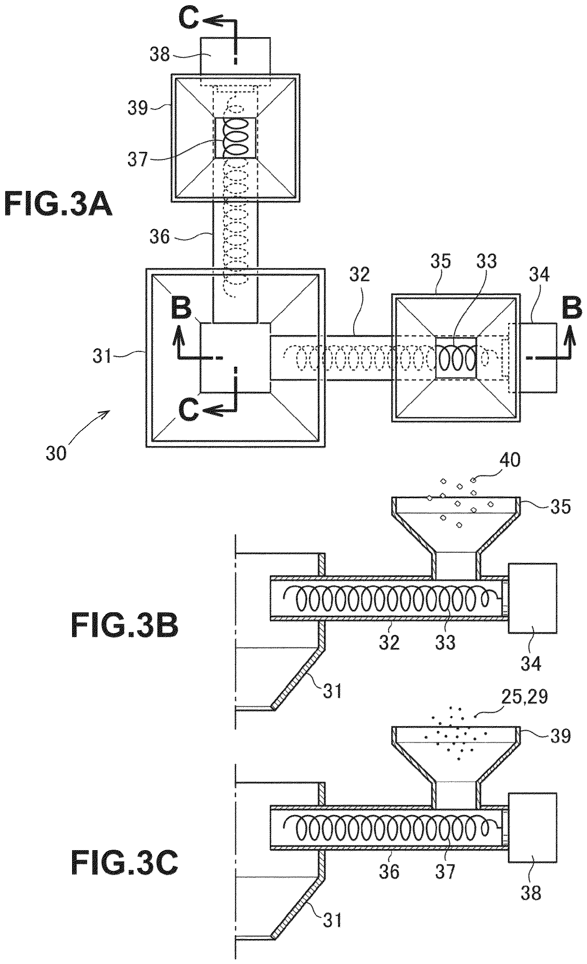

As illustrated in FIG. 3A, a two-species blending mechanism 30 includes a square container 31, a first pipe 32 that runs horizontally from the square container 31, a first helical coil spring 33 stored in the first pipe 32 so as to be freely rotatable, a first motor 34 that rotates the first helical coil spring 33, a first hopper 35 provided at the halfway location on the first pipe 32, a second pipe 36 that runs horizontally from the square container 31, a second helical coil spring 37 stored in the second pipe 36 so as to be freely rotatable, a second motor 38 that rotates the second helical coil spring 37, and a second hopper 39 provided at the halfway location on the second pipe 36.

As illustrated in FIG. 3B, polylactic resin grains 40 loaded in the first hopper 35 fall down to the first pipe 32, are fed by the first helical coil spring 33, and reach the square container 31. The rotating speed of the first helical coil spring 33 is controlled by the first motor 34, and thus the fed amount (the blended amount) of the polylactic resin grain 40 is controlled.

Preferably, the tip of the first pipe 32 is caused to protrude from the wall of the square container 31, and is caused to protrude up to the center of the square container 31. This allows the polylactic resin grains 40 to reach the drop port without sticking to the wall of the square container 31. At this time, the square container 31 does not exert a blending action, thereby preventing the polylactic resin grains 40 from being dispersed in air.

As illustrated in FIG. 3C, the wood grains 25 or the finer wood grain 29 loaded in the second hopper 39 fall down to the second pipe 36, are fed by the second helical coil spring 37, and reach the square container 31. The rotating speed of the second helical coil spring 37 is controlled by the second motor 38, and thus the fed amount (the blended amount) of the wood grains 25 or the finer wood grains 29 is controlled.

Preferably, the tip of the second pipe 36 is caused to protrude from the wall of the square container 31, and is caused to protrude up to the center of the square container 31. This allows the wood grains 25 or the finer wood grains 29 to reach the drop port without sticking to the wall of the square container 31. At this time, the square container 31 does not exert a blending action, thereby preventing the wood grains 25 or the finer wood grains 29 from being dispersed in air.

Note that the first helical coil spring 33 may be a screw provided with a spiral vane on the shaft. However, since the first helical coil spring 33 is obtained by processing a steel wire into a conical helix coil shape, it is quite inexpensive in comparison with such a screw. The same is true of the second helical coil spring 37.

The production costs of the two-species blending mechanism 30 can be reduced by adopting the first helical coil spring 33 and the second helical coil spring 37.

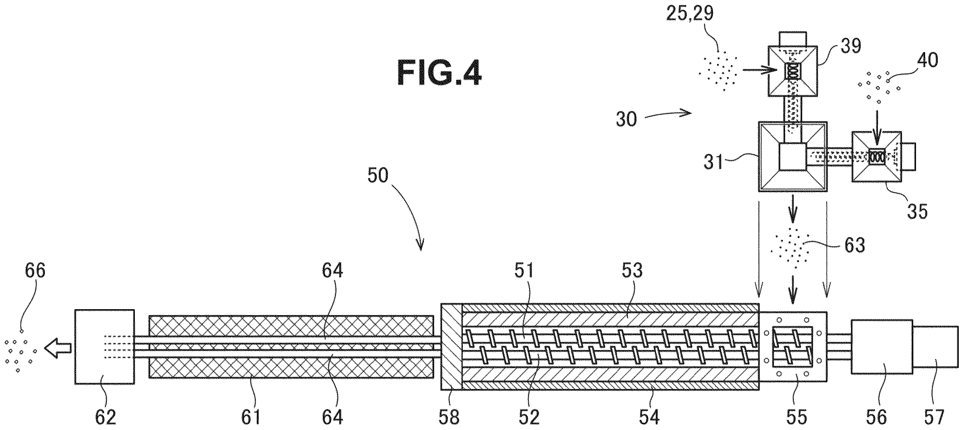

Through the above processes, blended grains (see FIG. 4, reference numeral 63) that have an appropriate amount of the polylactic resin grains 40 blended with an appropriate amount of the wood grains 25 or of the finer wood grains 29 are obtained.

### [Pellet Producing Apparatus]

As illustrated in FIG. 4, a pellet producing apparatus 50 includes a first screw 51, a second screw 52 provided side by side with the first screw 51, a barrel 53 that stores therein the first screw 51 and the second screw 52 so as to be freely rotatable, a heater 54 that surrounds the barrel 53, a drop port block 55 provided at one end of the barrel 53, a converter 56 and a drive motor 57 that rotate the first screw 51 and the second screw 52, a die 58 provided at the other end of the barrel 53, a strand cooling conveyer 61 placed outside the die 58 but in parallel with the barrel 53, and a stride cutter 62 placed at the ejection port of the strand cooling conveyer 61.

The converter 56 distributes drive force by the drive motor 57 into the rotation force of the first screw 51 and the rotation force of the second screw 52. The converter 56 enables the first screw 51 and the second screw 52 to rotate at the same speed and in the same direction. By changing the internal structure of the converter 56, the second screw 52 can be rotated in the reverse direction relative to the first screw 51. Accordingly, the rotation direction of the first screw 51 and that of the second screw 52 can be set arbitrary.

The square container 31 is fastened to the drop port block 55 by bolts.

That is, the two-species blending mechanism 30 is mounted on the pellet producing apparatus 50. By adopting such a mounting structure, it becomes unnecessary to place the two-species blending mechanism 30 on a floor, and the blended grains 63 immediately after blending can be loaded in the barrel 53. Hence, the time-course deterioration of the blended grains 63 can be suppressed.

Note that when the time-course deterioration is allowable, the two-species blending mechanism 30 may be placed so as to be apart from the pellet producing apparatus 50. In this case, the blended grains 63 are carried from the two-species blending mechanism 30 to the pellet producing apparatus 50 by bag or backet. Since the blended grains 63 can be produced in advance and are kept in stock, there is an advantage such that the degree of freedom for the production plan is enhanced.

An example grain size of the polylactic resin grain 40 to be loaded in the first hopper 35 is 3.0 mm.

An example grain size of the wood grain 25 to be loaded in the second hopper 39 is equal to or smaller than 50 µmm. Moreover, an example grain size of the finer wood grain 29 to be loaded in the second hopper 39 is equal to or smaller than 30 µmm.

An example blending ratio at the portion that is the square container 31 is as follow. That is, polylactic resin grain 40 : wood grain 25 (or finer wood grain 29) = 70 to 99 % by mass : 30 to 1.0 % by mass.

The blended grains 63 are kneaded by the rotation of the first screw 51 and that of the second screw 52, receives heat from the heater 54 so as to be melted, and are discharged in the form of a thin-bar-shape strand 64 from the die 58.

The strand 64 is cooled while being conveyed by the strand cooling conveyer 61, and is solidified, and then cut by the stride cutter 62. Hence, injection molding pellets 66 are obtained. An example grain size of the injection molding pellet 66 is 2.0 to 3.0 mm.

### [Injection Molding Device]

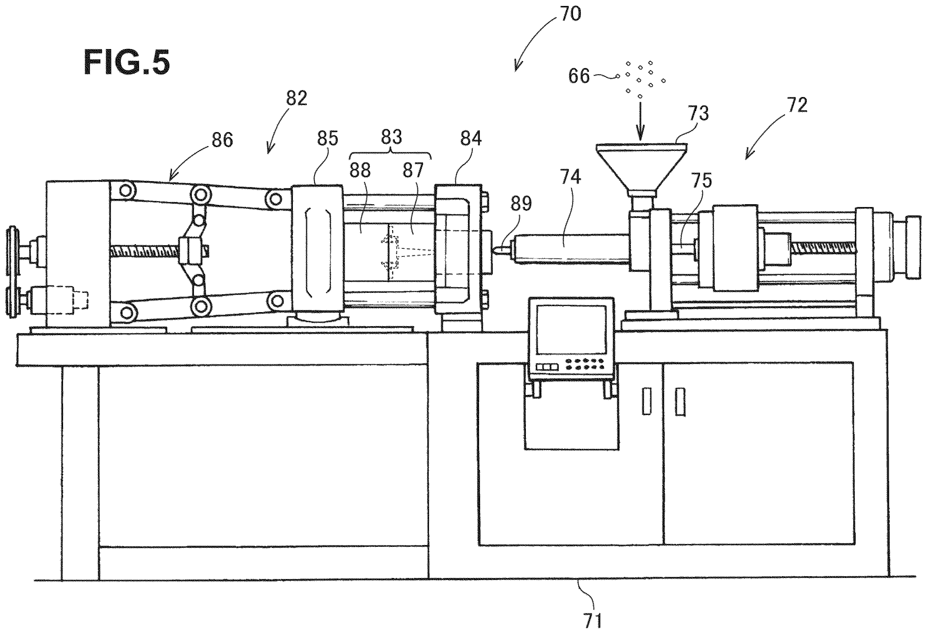

As illustrated in FIG. 5, an injection molding device 70 includes a bed 71, and, an injecting mechanism 72 and a mold clamping mechanism 82 both mounted on the bed 71.

At the mold clamping mechanism 82, mold clamping is executed on a mold 83 by a stationary mount 84, a movable mount 85 and a toggle mechanism 86. The mold 83 includes, for example, a stationary mold 87 and a movable mold 88.

At the injecting mechanism 72, the injection molding pellets 66 are loaded in a heating cylinder 74 through a hopper 73. The loaded injection molding pellets 66 are kneaded by the rotation of a screw 75 built in the heating cylinder 74, and by heat from the heating cylinder 74, and become a plasticization state.

The injecting mechanism 72 is moved horizontally in such a way that a nozzle 89 at the tip of the heating cylinder 74 contacts a sprue provided at the stationary mount 84 (or at the stationary mold 87).

The injection molding pellets 66 in the plasticization state (will be referred to as a molten resin material below) are accumulated inside the heating cylinder 74 at the nozzle-89 side. In accordance with the increase in the accumulated amount, the screw 75 retracts. When the retracting distance reaches a predetermined value, the screw 75 is advanced at high speed. Such an advancement causes the molten resin material to be extruded in the mold 83.

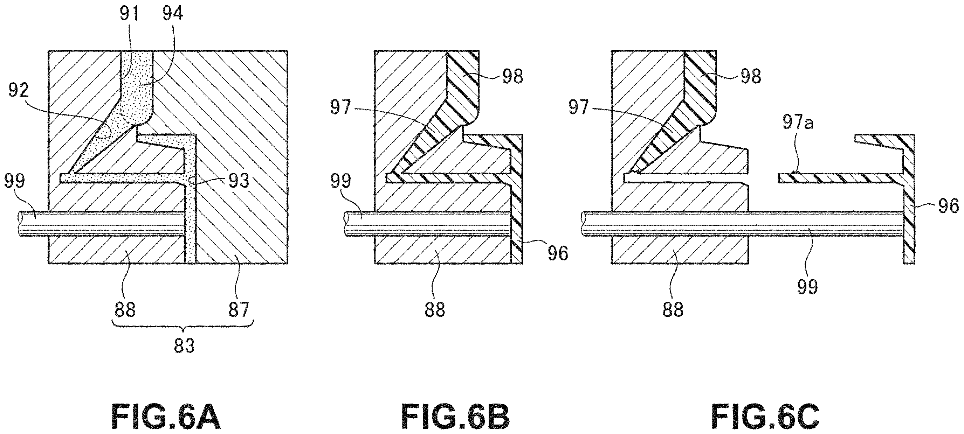

The internal states of the mold 83 and the subsequent processes will be described with reference to FIG. 6A, FIG. 6B and FIG. 6C.

As illustrated in FIG. 6A, in the mold 83, the molten resin material 94 flows a runner 91, a tunnel gate 92 and a product cavity 93 in this sequence, and the runner 91, the tunnel gate 92 and the product cavity 93 are filled with the molten resin material 94. In this state, the molten resin material 94 is cooled. When the cooling completes, the movable mold 88 is separated from the stationary mold 87.

As illustrated in FIG. 6B, a solidified product portion 96, a gate portion 97 and a runner portion 98 remain at the movable-mold-88 side. In this state, a push-out pin 99 is moved forwardly.

As illustrated in FIG. 6C, this causes the product portion 96 to be separated from the movable mold 88 by the push-out pin 99. Although a remaining gate portion 97a is present in the product portion 96, such a remaining gate portion 97a is small. By finishing the product portion 96 including the remaining gate portion 97a, a molding product is obtained.

According to, for example, a direct-gate scheme, the product portion 96 is separated from the movable mold 88 with the gate portion 97 being connected to such a portion. Hence, a process (a gate cutting process) of cutting the gate portion 97 from the product portion 96 is requisite.

Conversely, according to a tunnel gate scheme, as described with reference to FIG. 6B and FIG. 6C, since the gate portion 97 is cut in the product push-out process, there is an advantage such that the gate cutting process is unnecessary.

However, in order to enable the gate portion 97 to be cut in the product push-out process, in FIG. 6A, it is necessary to cause the tip of the tunnel gate 92 to have a small gate diameter. An example minimum gate diameter is 0.50 mm.

### [Example Experiments]

An objective of the present disclosure is, as described above, to provide an injection molding resin material which is formed by blending wood powders with polylactic resins, has a large tensile strength when made as a molding product, and has an excellent flowability in a mold. Hence, by utilizing the pellet producing apparatus (see FIG. 4, reference numeral 50) and the injection molding device (see FIG. 5, reference numeral 70), test pieces were produced, and the tensile strengths of the test pieces were examined. Note that the mold (see FIG. 5, reference numeral 93) was replaced with a mold that can obtain the test piece.

### [Materials]

Polylactic resin grains: FY201 available from High Chem Company Limited
Wood chips: Larch

### [Wood Grains]

Wood grains: For comparison, three kinds that were 300 µm, 212 µm and 2 µm were prepared.

### [Blending Ratio]

As for the blending ratio, the polylactic resin grains were 90 % by mass, and the wood grains were 10 % by mass.

### [Test piece]

Test piece: Dumbbell tensile test piece
Number of test pieces: Five test pieces were prepared in view of the reliability of a measured value.

### [Test Apparatus]

Test apparatus: Precise universal tester, AG-IS 250KN available from SHIMADZU CORPORATION

Table 1 shows obtained tensile strengths.

**[Table 1]**

| | | First Comparative Example | Second Comparative Example | First Example |
|---|---|---|---|---|
| Material | Polylactic Acid | 90 % by mass | 90 % by mass | 90 % by mass |
| | Wood Grain | 10 % by mass | 10 % by mass | 10 % by mass |
| Grain Size of Wood Grain | | 300µm | 212µm | 2µm |
| Tensile Strength (Mpa) | Test Piece 1 | 39,1 | 45,7 | 63,7 |
| | Test Piece 2 | 39,8 | 47,1 | 62,5 |
| | Test Piece 3 | 41,3 | 46,9 | 59,2 |
| | Test Piece 4 | 41,2 | 45,7 | 62,3 |
| | Test Piece 5 | 36,5 | 45,7 | 56,6 |
| | Average | 39,6 | 46,2 | 60,9 |

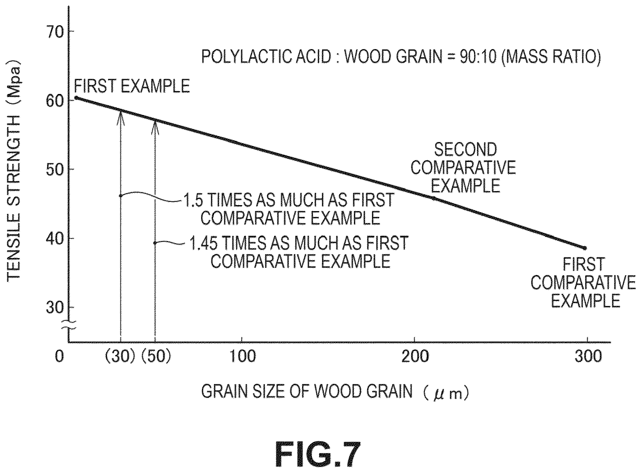

FIG. 7 is a graph for the average of the tensile strengths shown in Table 1.

As illustrated in FIG. 7, it becomes clear that the smaller the grain size of the wood grain is, the greater the tensile strength becomes.

The grain size of the first comparative example that is 300 µm corresponds to the value disclosed in Japan Patent No. 5321254.

One of the objectives of the present disclosure is to accomplish the greater tensile strength than that of the comparative examples, and the level for increase (an expected value) is set to be 1.5 times. Such factor of 1.5 is accomplished when the grain size is equal to or smaller than 30 µm in the horizontal axis. Even if the grain size is equal to or smaller than 50 µm, such an objective is substantially accomplishable.

Accordingly, it is confirmed that the appropriate grain size of the wood grain is equal to or smaller than 50 µm, and it is further appropriate if such a size is equal to or smaller than 30 µm.

### [Additional Experiments]

Next, additional experiments were carried out for the blending ratio.

### [Blending Ratio]

As for the blending ratio, the polylactic resin grains were 80 % by mass, and the wood grains were 20 % by mass.

### [Wood Grains]

Wood grains: 2 µm

The other conditions were the same as those of the above-described experiments. Table 2 shows the results.

**[Table 2]**

| | | Second Example |
|---|---|---|
| Material | Polylactic Acid | 80 % by mass |
| | Wood Grain | 20 % by mass |
| Grain Size of Wood Grain | | 2µm |
| Tensile Strength (Mpa) | Test Piece 1 | 55,7 |
| | Test Piece 2 | 50,5 |
| | Test Piece 3 | 55,2 |
| | Test Piece 4 | 53,4 |
| | Test Piece 5 | 53,4 |
| | Average | 53,6 |

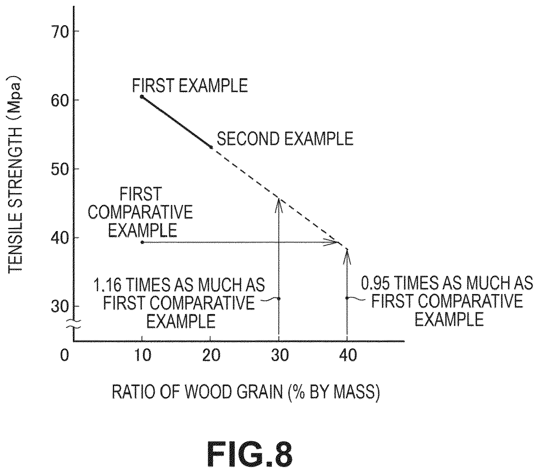

FIG. 8 is a graph for the average of the tensile strengths shown in Table 2.

In FIG. 8, the first example and the first comparative example were added for comparison.

According to FIG. 8, it becomes clear that the larger the ratio of the wood grains is, the smaller the tensile strength becomes.

Although it is an estimated value, when the ratio of the wood grains becomes 40 % by mass, the result becomes 0.95 times of the first comparative example. Hence, an objective of the present disclosure cannot be accomplished.

When the ratio of the wood grains is 30 % by mass, the result becomes 1.16 times of the first comparative example. Hence, it is slightly insufficient but the improvement of the tensile strength can be expected.

Hence, it is preferable that, as for the blending, the wood grains should be equal to or smaller than 30 % by mass, more preferably, equal to or smaller than 20 % by mass, and a further enhancement of the tensile strength can be expected when it is equal to or smaller than 10 % by mass.

### [Flowability Examination]

The minimum diameter of the tunnel gate was set to be 0.50 mm, i.e., 500 µm, the blended wood grains were set to be 10 % by mass, and pressure (internal pressure) at the time of the injection from the nozzle 89 illustrated in FIG. 5 was examined.

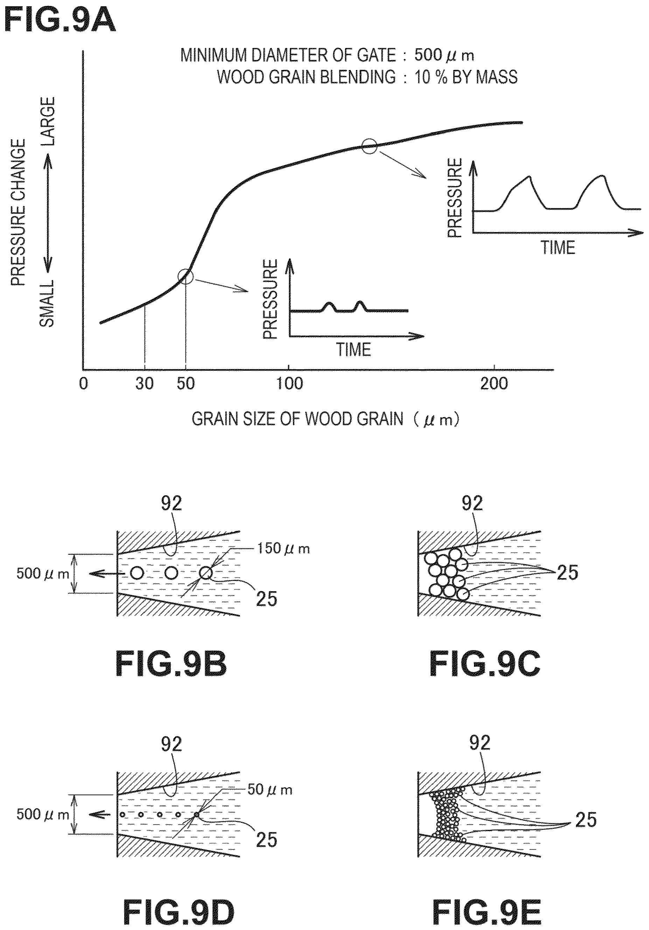

Consequently, a tendency illustrated in FIG. 9A was confirmed.

FIG. 9A is a graph having a horizontal axis that represents the grain size (µm) of the wood grain, and the vertical axis that represents a change in the injection pressure.

As illustrated in FIG. 9A, when the grain size of the wood grain exceeds 50 µm, the pressure change increases. Conversely, when the grain size of the wood grain is equal to or smaller than 50 µm, the pressure change is slight.

The reason why the pressure change occurs will be estimated through FIG. 9B to FIG. 9E.

As illustrated in FIG. 9B, since the 150-µm wood grains 25 are substantially 1/3 of the minimum diameter (500 µm) of the gate, and are smaller than the minimum diameter of the gate, those grains flow as indicated by an arrow (←). At this time, the pressure becomes predetermined pressure.

As illustrated in FIG. 6C, even if the wood grains 25 are each 150 µm, when the multiple grains gather, those gathered grains block off the gate, and thus the pressure keenly increases. When a little time elapses, the gathered grains then collapse.

That is, the states in FIG. 9B and FIG. 9C are repeated, and thus the pressure change increases.

As illustrated in FIG. 9D, since the 50-µm wood grains 25 are 1/10 of the minimum diameter (500 µm) of the gate, and are quite smaller than the minimum diameter of the gate, those grains flow as indicated by an arrow (←). At this time, the pressure becomes predetermined pressure.

Although the occurrence frequency is quite small, when the large number of 50-µm wood grains 25 gather, the gate in FIG. 9E is blocked off. However, such gathered grains collapse immediately, and the state returns to FIG. 9D. Consequently, the pressure change becomes small.

Through the above examinations, it is confirmed that even in the case of a tunnel gate, when the grain size of the wood grain is equal to or smaller than 50 µm, preferably, equal to or smaller than 30 µm, a stable flow as illustrated in FIG. 9D can be maintained, and thus the flowability is enhanced.

In view of the above-described technical knowledges, a pellet producing method to be described below is accomplished.

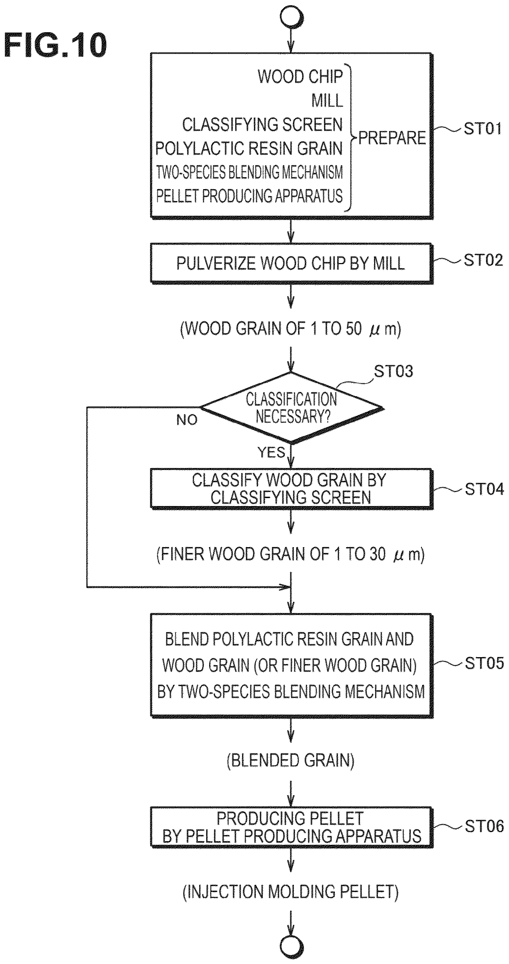

In a step ST01 in FIG. 10, wood chips, a mill, a classifying screen, polylactic resin grains, a two-species blending mechanism and a pellet producing apparatus are provided.

In a step ST02, wood chips are loaded in the mill, and are pulverized. By such pulverization, wood grains having a grain size of 1 to 50 µm (i.e., equal to or smaller than 50 µm) are obtained.

In a step ST03, it is determined whether or not to execute classification for grain size.

When it is unnecessary to execute the classification, the preparation of the classifying screen in the step ST01 can be omitted.

Moreover, when the finer wood grains having a grain size that is equal to or smaller than 40 µm (or equal to or smaller than 30 µm) are obtainable by increasing the rotating speed of the pulverizing blade (see FIG. 1, reference numeral 14) in the mill, the classifying process can be omitted.

When the classification is necessary, in a step ST04, the classification is executed by the classifying screen. The finer wood grains having a grain size of 1 to 30 µm (i.e., equal to or smaller than 30 µm) can be obtained by this classification.

In a step ST05, the wood grains (or the finer wood grains) and the polylactic resin grains are loaded in the two-species blending mechanism, and are blended. Consequently, blended grains are obtained.

In a step ST06, the blended grains are loaded in the pellet producing apparatus, kneaded and extruded. An obtained strand is then cut. Consequently, injection molding pellets are obtained.

Note that the mill 10, the two-species blending mechanism 30, and the pellet producing apparatus 50 described in the above examples are merely examples, the structure and the principle thereof can be changed as appropriate.

Moreover, the injection molding pellet according to the present disclosure is suitable for a tunnel gate, but can be also applied for injection to a mold that has other types of gates. Example other types of gates are a direct gate, a side gate, and a pin gate, etc.

The present disclosure is suitable for an injection molding pellet that includes a polylactic resin and a wood grain (or a finer wood grain).

## Claims

1. An injection molding pellet (66) that is applied for injection molding,
wherein a base material of the injection molding pellet (66) is a polylactic resin; and
wherein the base material is mixed with wood grains (25) with a grain size that does not exceed 50 µm.

2. A pellet producing method for producing the injection molding pellet (66) according to claim 1, the method comprising:
providing a wood chip (23), a mill (10), the polylactic resin, a two-species blending mechanism (30), and a pellet producing apparatus (50);
loading the wood chip (23) in the mill (10) and pulverizing by the mill (10) so as to obtain the wood grains (25) with the grain size that is equal to or smaller than 50 µm;
loading the wood grains (25) and the polylactic resin in the two-species blending mechanism (30) to obtain blended grains (63) by the two-species blending mechanism (30); and
loading the blended grains (63) in the pellet producing apparatus (50), kneading and extruding by the pellet producing apparatus (50), and cutting an obtained strand (64) to obtain the injection molding pellet (66).

3. An injection molding pellet (66) that is applied for injection molding,
wherein a base material of the injection molding pellet (66) is a polylactic resin; and
wherein the base material is mixed with finer wood grains (29) with a grain size that does not exceed 30 µm.

4. A pellet producing method for producing the injection molding pellet (66) according to claim 3, the method comprising:
providing a wood chip (23), a mill (10), a classifying screen (28), polylactic resin grains (40), a two-species blending mechanism (30), and a pellet producing apparatus (50);
loading the wood chip (23) in the mill (10) and pulverizing by the mill (10) so as to obtain wood grains (25);
classifying the obtained wood grains (25) by the classifying screen (28) to obtain the finer wood grains (29) with the grain size that is equal to or smaller than 30 µm;
loading the finer wood grains (29) and the polylactic resin grains (40) in the two-species blending mechanism (30) to obtain blended grains (63) by the two-species blending mechanism (30); and
loading the blended grains (63) in the pellet producing apparatus (50), kneading and extruding by the pellet producing apparatus (50), and cutting an obtained strand (64) to obtain the injection molding pellet (66).
